# FASCICULE DE BREVET EUROPEEN

(11) **EP 2 068 647 B1**
(45) Date de publication et mention de la délivrance du brevet: **02.04.2014**
(21) Numéro de dépôt: 07823780.7
(22) Date de dépôt: 06.09.2007
(51) Int. Cl.: A23L 1/06, A23L 1/064, A23L 1/08, A23L 1/164, A23L 1/212, A21D 13/00

(54) **PRODUIT DE CUISSON CEREALIER COMPORTANT UN FOURRAGE COMPRENANT UNE COMPOSITION ALIMENTAIRE**
EIN GEKOCHTES GETREIDEPRODUKT UMFASSEND EINE FÜLLUNG, WELCHE EINE LEBENSMITTELZUSAMMENSETZUNG BEINHALTET
A COOKED CEREAL PRODUCT COMPRISING A FILLING, THE FILLING COMPRISING A FOOD COMPOSITION

(30) Priorité: 11.09.2006 FR 0607937
(43) Date de publication de la demande: 17.06.2009
(73) Titulaire: Intercontinental Great Brands LLC, East Hanover, NJ 07936 (US)
(72) Inventeur: RABAULT, Jean-Luc, 78730 Ponthevrard (FR); BELOUIN, François, 91590 Cerny (FR)
(74) Mandataire: Cabinet Plasseraud
(86) Numéro de dépôt international: PCT/FR2007/051884
(87) Numéro de publication internationale: WO 2008/031970

(56) Documents cités:
- EP-A1- 1 369 041
- EP-A2- 1 671 549
- WO-A-2004/006690
- FR-A3- 2 847 770
- GB-A- 755 593
- US-A- 4 456 625
- US-A- 4 518 622
- US-A- 4 919 956
- US-A1- 2002 090 446
- US-A1- 2002 119 948
- US-B1- 6 221 420
- DATABASE WPI Week 198943 Derwent Publications Ltd., London, GB; AN 1989-315706 XP002426465 & SU 1 475 570 A (CONFECTIONERY IND) 30 avril 1989 (1989-04-30)
- WEI Y P ET AL: "FLOW PROPERTIES OF FRUIT FILLINGS" FOOD RESEARCH INTERNATIONAL, ELSEVIER APPLIED SCIENCE, BARKING, GB, vol. 34, no. 5, 2001, pages 377-381, XP001057343 ISSN: 0963-9969
- SAJILATA M G ET AL: "Specialty starches for snack foods" CARBOHYDRATE POLYMERS, APPLIED SCIENCE PUBLISHERS, LTD. BARKING, GB, vol. 59, no. 2, 10 janvier 2005 (2005-01-10), pages 131-151, XP004696182 ISSN: 0144-8617

## Description

La présente invention concerne un produit de cuisson céréalier comportant un fourrage, ledit fourrage comprenant une composition alimentaire constituée d'une phase aqueuse continue, ladite composition alimentaire ayant une activité de l'eau (Aw) de 0,3 à 0,82 et une teneur en matières grasses de moins de 15 % en poids par rapport au poids total de la composition et comprenant au moins une poudre d'amidon non gélatinisé natif ou surséché.

La réduction de la teneur en matières grasses (MG) et en sucres dans les produits alimentaires, tout en conservant leurs propriétés organoleptiques et leur texture, est un défi majeur de l'industrie agroalimentaire. Une telle réduction de la teneur en sucres, en particulier en saccharose, est très désirable pour la lutte contre l'obésité, notamment dans le domaine des produits à forte teneur en sucres.

Les confitures, gelées ou pâtes de fruits sont préparées à partir de fruits, et/ou de jus naturel de fruits et d'une importante quantité de sucres tels que saccharose et sirop de glucose dans la plupart des cas. Généralement, on ajoute également de l'acide citrique et/ ou de la pectine. On connaît également l'utilisation d'amidons modifiés gélatinisés dans certaines confitures de fourrage ou de nappage, ou dans certaines préparations de fruits, pour améliorer la résistance à la cuisson.

Les confitures traditionnelles ont généralement une teneur en sucres de 60 à 68 % en poids. On connaît également des confitures allégées dans lesquelles tout ou partie des sucres sont remplacés par de l'eau. Mais leur conservation est plus délicate et elles doivent donc être conservées au réfrigérateur après ouverture. De plus, elles contiennent toujours de 42 à 46% de sucres et surtout on a toujours presque 100% des calories apportées par les sucres.

Un miel contient 76 à 78% de sucres, et il n'existe pas de miel allégé en sucres.

Aujourd'hui, les consommateurs sont de plus en plus préoccupés par la nutrition et les bienfaits potentiels des aliments et de plus un plus de consommateurs sont à la recherche de produits allégés en sucres et/ou en matières grasses qui procurent en même temps une sensation de satiété prolongée. Ainsi, l'ajout de fibres solubles et insolubles a également été proposé. Toutefois, ces solutions présentent de nombreux inconvénients. Il est vrai que les fibres solubles augmentent la satiété, mais leur utilisation est souvent liée à des troubles digestifs tels qu'un ballonnement, des flatulences ou un transit accéléré. Les fibres insolubles provoquent en général des irritations au niveau des intestins et ne sont pas toujours acceptables au niveau organoleptique.

Il est connu d'ajouter de l'amidon qui est gélatinisé, soit par la mise en oeuvre d'un amidon prégelatinisé, soit le plus souvent par la cuisson d'un amidon natif en cours du procédé de fabrication, notamment pendant la pasteurisation ou la stérilisation en tant qu'épaississant (agent de texture) dans des confitures.

La demande de brevet WO 2004/006690 décrit des tartes surgelées comprenant un fourrage constitué de fruits et d'une suspension comprenant 4 à 15% d'amidon.

Le brevet US 4 518 622 décrit un mélange de solides comprenant de l'amidon prégélatinisé, ledit mélange étant hydraté pour réaliser un fourrage sous forme d'un gel pour tartes.

Le brevet US 6 221 420 décrit des fourrages comprenant de l'amidon non-gélatinisé, ledit fourrage étant cuit à une température comprise entre 85 et 88°C puis introduit dans une boite de conserve qui est chauffée dans un autoclave avec de la vapeur jusqu'à ce que la température interne du fourrage atteigne 93°C.

Le brevet EP 1 369 041 décrit des substituts de gélatine comprenant de l'amidon. Lesdits substituts de gélatine sont incorporés dans un produit alimentaire qui est subséquemment chauffé à une température autour de 90°C.

Le brevet US 4 919 956 décrit un procédé de séchage par extrusion de miels ou des mélasses pouvant contenir de l'amidon à une température comprise entre 75 et 250°C.

La demande de brevet US 2005/091716 décrit un nouveau type d'amidon issu de plantes transgéniques, ledit amidon pouvant être incorporé dans des produits alimentaires en tant qu'épaississant.

Le brevet DE 3 726 577 décrit des pâtes à pâtisserie crues à longue conservation ayant une activité de l'eau Aw comprise entre 0,6 et 0.8, 30 à 40% de farine, 13 à 20% d'amidon natif, 15 à 25% de graisses et 15 à 25% de sucre.

La demande de brevet US 2002/090446 décrit de l'amidon de pomme de terre waxy modifié chimiquement. Ledit amidon étant incorporé dans des compositions alimentaires en tant qu'épaississant.

Le brevet EP 1 671 549 décrit une méthode d'amélioration de la performance physique ou de la récupération chez un être humain par administration d'une composition alimentaire contenant des sucres lents tels que l'amidon de maïs non cuit.

Le brevet US 4 456 625 décrit des produits de boulangerie cuits, prêts-à-consommer et de longue conservation qui contiennent une part importante d'amidon non-gélatinisé.

Le brevet FR 2 847 770 décrit des compositions concentrées fluides, stables à la conservation, comprenant de l'amidon non gélatinisé, utilisées en tant que sauces, soupes ou jus.

De plus, l'amidon natif gélatinisé présente une rétrogradation dans le temps, surtout pour les produits très peu humides, ce qui conduit à une modification de texture, notamment une synérèse. Pour éviter ce phénomène, l'amidon est parfois modifié chimiquement ou physiquement.

Cependant, la modification réduit fortement l'intérêt de l'amidon pour le consommateur, car un tel amidon est perçu comme un additif est non comme un ingrédient naturel.

De plus, la cuisson, sous l'effet de l'hydratation et la chaleur, a pour effet d'augmenter l'indice glycémique d'un aliment. La carotte par exemple a un indice glycémique de 35 quand elle est crue. Dès qu'elle est bouillie dans l'eau son indice glycémique monte à 85 du fait de la gélatinisation de son amidon. Une alimentation riche en aliments ayant un indice glycémique élevé n'est notamment pas en ligne avec les recommandations des nutritionnistes qui préconisent des aliments ayants un indice glycémique bas.

Un but de la présente invention est donc de pallier tout ou partie des inconvénients cités ci-dessus et notamment de proposer des produits de cuisson céréaliers plus en ligne avec les recommandations des nutritionnistes qui préconisent de réduire les calories ayant pour origine les graisses ou les sucres et d'augmenter la part des calories provenant des glucides complexes.

Un autre but est de proposer des produits de cuisson céréaliers avec un pouvoir rassasiant plus élevé et/ou plus prolongé que les produits de cuisson céréaliers de l'art antérieur.

A cette fin, la présente invention propose un produit de cuisson céréalier comportant un fourrage, ledit fourrage comprenant une composition alimentaire constituée d'une phase aqueuse continue qui a une activité de l'eau (Aw) de 0,3 à 0,82 et une teneur en matières grasses de moins de 15 % en poids par rapport au poids de la composition alimentaire, une teneur en sucres de 10 à 84% en poids par rapport au poids de la composition alimentaire, de 4 à 40% en poids sec par rapport au poids total de la composition alimentaire d'une poudre d'amidon non gélatinisé natif ou surséché, l'amidon non gélatinisé ayant, pour au moins 90% des particules, une granulométrie comprise entre 2µm et 100µm, et ledit amidon n'étant pas chauffé au dessus de sa température de gélatinisation lors de l'utilisation ultérieure de la composition alimentaire.

L'homme de l'art connait différentes techniques pour reconnaitre l'amidon non gélatinisé ; la plus simple est l'observation au microscope en lumière polarisée : les grains non gélatinisés apparaissent sous forme de « croix de malte » (bi-réfringence), alors que les grains gélatinisés perdent cette caractéristique.

Les compositions alimentaires à phase aqueuse continue au sens de la présente invention comprennent notamment les confitures, les miels, les gelées, les produits à tartiner à phase aqueuse continue, les compotes, les purées de fruits et/ou de légumes avec ou sans morceaux, les desserts fruitiers les pâtes de fruits. Le terme « produit à tartiner à phase aqueuse continue » au sens de la présente invention désigne une denrée alimentaire qui, de part sa consistance, se prête à être étendue sur du pain ou à d'autres emplois semblables, mais dont la composition ne répond ni à la définition de la gelée, ni à celle de la confiture. Les « produits à tartiner à phase aqueuse continue » peuvent par exemple être obtenue à partir de purée de fruit, de concentré de jus de fruits ou de pâte de noix.

L'activité de l'eau (Aw) d'un matériau se définit comme le rapport entre la pression de vapeur de l'eau du matériau et la pression de vapeur d'eau pure à la même température. Cette notion est bien connue de l'homme du métier qui connaît parfaitement les méthodes de mesure adaptées. Dans la plupart des cas l'activité de l'eau n'est pas proportionnelle à la teneur en eau du matériau. Ainsi, l'activité de l'eau (Aw) d'un yoghourt aux fruits ayant une teneur en eau de 82% en poids est par exemple de 0,99, tandis que le beurre, qui a également une activité de l'eau de 0,99, a une teneur en eau de 16 % en poids. Par convention, nous mesurons toutes les Aw dans la présente invention à 25°C, et 24H à 3 jours après la fabrication des recettes.

L'activité de l'eau (Aw) de la composition alimentaire selon l'invention est généralement de 0,3 à 0,82, de préférence 0,4 à 0,82, plus préférentiellement encore de 0,50 à 0,82 de 0,58 à 0,82 et 0,58 à 0,73. Si l'Aw est de 0,3 à 0,6, la composition se conserve à une température de 15 à 25°C pendant au moins un mois, de préférence pendant au moins 6 mois. Si l'Aw est de 0,6 à 0,8, la composition se conserve à une température de 15 à 25°C pendant au moins une semaine, de préférence pendant au moins 1 mois. Et si l'Aw est de 0,8 à 0,82, la composition se conserve à une température comprise entre 1 et 10°C pendant au moins 1 semaine, de préférence pendant au moins 1 mois ou à un stockage congelé pendant au moins 1 mois, de préférence pendant au moins 6 mois.

Avantageusement, la teneur en matière sèche des compositions alimentaires selon l'invention est inférieure à 80 %, de préférence inférieure à 70 %, et plus préférentiellement encore inférieure à 60 % en poids.

La Demanderesse a eu le mérite de trouver qu'il était possible d'améliorer la composition nutritionnelle et d'augmenter pouvoir rassasiant des compositions alimentaires, notamment des confitures et du miel, et d'améliorer leur composition nutritionnelle conformément aux recommandations des nutritionnistes, par l'ajout d'au moins une poudre d'amidon non gélatinisé natif ou surséché ayant, pour au moins 90% des particules, une granulométrie comprise entre 2µm et 100µm, et ledit amidon n'étant pas chauffé au dessus de sa température de gélatinisation lors de l'utilisation ultérieure de la composition alimentaire. En fait, par l'ajout dudit amidon, on augmente le ratio (calories apportées par les glucides lentement digestibles)/(teneur totale en calories), ce qui retarde l'apparition d'une sensation de faim après consommation d'une composition alimentaire selon l'invention.

L'ajout d'une poudre d'amidon non gélatinisé ne permet pas seulement d'augmenter le ratio (calories apportées par les glucides lentement digestibles)/(teneur totale en calories), mais aussi de réduire la teneur en sucres, notamment du saccharose, et/ou en matière grasse des compositions alimentaires. Selon la présente invention, il est ainsi possible de fournir des compositions alimentaires allégées en sucres, notamment en saccharose, qui possèdent un pouvoir rassasiant plus élevé qu'une composition alimentaire allégée traditionnelle ayant la même teneur en sucres, notamment en saccharose.

Selon la présente invention, il est ainsi possible de fournir des compositions alimentaires allégées en matières grasses et/ou en sucres, qui possèdent un pouvoir rassasiant plus élevé qu'une composition alimentaire allégée traditionnelle.

Les compositions alimentaires selon l'invention ont une teneur en matières grasses inférieure à 15 % en poids par rapport au poids total de la composition alimentaire. De préférence, la teneur en matières grasses est de 0 à 10 %, de préférence de 0 à 5 %, plus préférentiellement encore de 0 à 3 %, et même de 0 à 1 % en poids par rapport au poids total de la composition alimentaire.

A la différence des sucres, la poudre d'amidon non gélatinisé n'est pas sucrée et n'est pas soluble dans l'eau et il est donc surprenant que les compositions alimentaires selon l'invention présentent des caractéristiques organoleptiques semblables, voire meilleures, que les produits conventionnels très sucrés, souvent perçus comme brûlants en bouche ou en arrière gorge.

Selon l'invention, tous les types d'amidons peuvent être utilisés dans la composition alimentaire à condition qu'il s'agisse d'amidons non gélatinisés. Le terme « amidon non gélatinisé » veut dire que l'amidon n'est ni prégélatinisé, ni gélatinisé au cours du procédé de fabrication ou de préparation avant consommation. Bien entendu, on peut utiliser des mélanges d'amidons de différentes origines.

Les amidons pouvant être utilisés aux fins de la présente invention comprennent l'amidon de blé, l'amidon de riz, l'amidon de maïs, l'amidon de maïs waxy, l'amidon de sorgho, l'amidon de tapioca, l'amidon de pomme de terre, l'amidon de manioc et leurs mélanges.

Selon l'invention, l'amidon non gélatinisé peut être un amidon natif. Contrairement aux amidons gélatinisés et à la plupart des autres hydrocolloïdes, dont les protéines et les maltodextrines, l'amidon natif présente en général une absorption d'eau faible. Par conséquent, l'ajout d'amidon natif dans une composition alimentaire constitué d'une phase aqueuse continue ne provoque qu'une légère augmentation de viscosité, tandis que l'amidon gélatinisé ou les autres hydrocolloïdes précités provoqueront une augmentation importante de viscosité. L'utilisation d'amidon natif permet donc d'ajouter des quantités plus importantes d'amidon par rapport à l'amidon gélatinisé, tout en gardant une viscosité proche de celle du produit de départ.

De plus, l'amidon natif étant un produit naturel non modifié, il ne fait pas partie des additifs alimentaires, qui doivent être signalés en tant que tels sur l'emballage du produit commercialisé.

En outre, l'amidon natif ne présente pas d'inconvénients digestifs, contrairement aux polyols et aux fibres solubles qui ont, entre autres, un effet laxatif, ce qui est particulièrement indésirable dans des produits qui sont destinés aux enfants. Le fait qu'il soit non gélatinisé laisse l'amidon natif lentement digestible, ce qui permet d'augmenter le ratio (calories apportées par les glucides lentement digestibles)/(teneur totale en calories). Ainsi l'ajout d'amidon natif dans les compositions alimentaires selon l'invention entraîne une sensation de satiété prolongée par rapport aux compositions alimentaires constituées d'une phase aqueuse continue traditionnelle, notamment par rapport aux compositions alimentaires constituées d'une phase aqueuse continue allégées en sucres et/ou en matières grasses. Et surtout, la répartition des calories est plus équilibrée entre glucides complexes, matière grasse et sucres, conformément aux recommandations des nutritionnistes.

En outre, la densité de l'amidon natif est élevée, ce qui limite l'encombrement stérique, et ses granules présentent peu de porosité accessible à l'eau constituant la phase aqueuse continue. Ces deux caractéristiques sont importantes afin de limiter l'augmentation de viscosité d'une composition alimentaire contenant des solides en suspension comme les granules d'amidon.

La granulométrie des amidons natifs, qui est généralement comprise entre 2 µm et 100 µm, et plus généralement entre 5 µm et 45 µm, est également idéale pour une utilisation dans les compositions alimentaires constituées d'une phase aqueuse continue. Ainsi les amidons natifs ne comprennent ni trop de particules fines, ni trop de grosses particules. La présence de particules fines augmente la viscosité de la composition alimentaire et nécessite donc en général d'augmenter la teneur en matières grasses et/ou en eau. Cependant, dans grand nombre de compositions alimentaires, telles que les confitures ou les miels, il n'est pas possible d'augmenter la teneur en eau et/ou en matières grasses sans altérer considérablement leurs propriétés organoleptiques et / ou la conservation. A l'inverse, la présence de grosses particules confère à la composition alimentaire une sensation sableuse dans la bouche. L'équilibre entre granules de petite taille et de grande taille peut, en tant que de besoin, être ajusté en fonction des textures et propriétés recherchées, en mélangeant, en différentes proportions, des amidons de différentes origines.

La taille des particules de l'amidon est pour au moins 90% des particules comprise entre 2 µm et 100 µm, de préférence entre 5 µm et 45 µm.

Dans un autre mode de réalisation, au moins 5%, de préférence au moins 10 %, et plus préférentiellement encore au moins 15 % des particules de l'amidon ont une taille supérieure ou égale à 10 µm. De cette façon, on obtient un bon compromis entre l'augmentation de la viscosité de la composition alimentaire suite à l'ajout d'amidon non gélatinisé et l'augmentation du ratio (calories apportées par les glucides complexes)/(calories totales).

Bien entendu, il est également possible d'utiliser un ou plusieurs amidon dont la taille de particules de l'amidon est pour au moins 90% des particules comprise entre 2 µm et 100 µm, de préférence entre 5 µm et 45 µm et dont au moins 5%, de préférence au moins 10 %, et plus préférentiellement encore au moins 15 % des particules de l'amidon ont une taille supérieure ou égale à 10 µm.

Parmi les amidons natifs, on préfère l'amidon de blé, car il présente une granulométrie idéale de 2 µm à 45 µm, et car il est bon marché.

Les amidons de maïs et de manioc font aussi partie des amidons préférés de par leur granulométrie.

D'autres avantages de l'amidon natif sont sa saveur neutre et sa couleur blanche, ce qui permet son utilisation dans une large gamme de produits, tels que confitures, miels et compotes. Enfin, l'amidon natif est un ingrédient bon marché ; et il peut être employé sans broyage dans les compositions alimentaires constituées d'une phase aqueuse continue, ce qui permet un procédé de fabrication simplifié et une plus grande productivité.

Toutefois, il est également possible d'utiliser de l'amidon broyé afin d'obtenir des granulométries spécifiques qui ne sont pas ou difficilement accessible sans broyage.

Outre l'amidon natif, on peut également utiliser conformément à l'invention des amidons surséchés, c'est-à-dire des amidons, non gélatinisé, dont la teneur en humidité a été amenée en dessous de leur humidité relative d'équilibre. On peut également envisager l'utilisation d'un mélange d'amidons natifs et d'amidons surséchés ou de différents types d'amidons surséchés.

L'amidon non gélatinisé est apporté sous forme d'une poudre d'amidon, mais il peut également être apporté en partie sous forme d'une farine riche en amidon non gélatinisé ou d'un mélange de farines riches en amidon. L'utilisation d'une farine riche en amidon peut être avantageuse, notamment en termes de coût.

La poudre d'amidon modifie moins les caractéristiques du produit dans lequel elle est incorporée que la farine. Ainsi, la poudre d'amidon rend le produit la contenant moins collant que la farine grâce à l'absence de protéines. De plus, la poudre d'amidon présente une granulométrie plus fine que la farine car elle contient surtout des grains d'amidon isolés et non des cellules broyées comme la farine. Enfin, la poudre d'amidon possède un goût plus neutre et une couleur plus blanche que la farine.

La farine riche en amidon peut être une farine native ou surséchée. On peut par exemple utiliser des farines de céréale, telles que la farine de blé, la farine de maïs ou la farine de riz, ou des farines de tubercules, telles que la farine de pomme de terre. A titre d'exemple,on peut citer la farine de blé, qui peut être assimilée à un mélange de 12 % en poids de protéines, 83 % d'amidon à 13 % d'eau, de 1 % de matières grasses et de 4% de fibres.

La teneur en amidon de la composition alimentaire de fourrage pour produit de cuisson céréalier selon l'invention est de 4 à 40 %, de préférence de 10 à 40 %, et plus préférentiellement encore de 20 à 40 %, avantageusement 30 à 40 % en poids sec par rapport au poids de la composition alimentaire. L'amidon de blé contient généralement 13 % d'eau et 87 % d'amidon sec. L'emploi de 40 % d'amidon de blé apporte donc 34.8 % d'amidon sec.

Pour une compote, une purée de fruits, la teneur en amidon est avantageusement comprise entre 2 et 20%, de préférence entre 5 et 15% % et plus préférentiellement encore entre 5 et 10% en poids sec par rapport au poids de la composition alimentaire.

Les grains d'amidons formant une suspension avec la phase aqueuse de la composition alimentaire, l'homme du métier choisira donc de préférence un petit seuil d'écoulement pour la composition alimentaire selon l'invention pour éviter ou limiter la sédimentation des grains d'amidon. Cependant, dans certains cas la sédimentation des grains d'amidon peut être acceptée ou même recherchée.

La composition alimentaire selon l'invention peut être une composition à saveur sucrée ou salée.

Les compositions alimentaires de fourrage pour produit de cuisson céréalier selon l'invention ont une teneur en sucres de 10 à 84 %, de préférence de 10 à 56 %, et plus préférentiellement encore de 10 à 48 %, de 10 à 36 % en poids par rapport au poids total de la composition alimentaire. Dans le cas des compositions alimentaires à saveur salée selon l'invention, la teneur en sucres est généralement de 10 % à 55 %, de préférence de 10 à 35 %, et plus préférentiellement encore de 10 à 25 %, et même de 10 à 15 % en poids par rapport au poids total de la composition alimentaire. Les compositions alimentaires à saveur sucrée selon l'invention comprennent de préférence de 10 à 56 %, et plus préférentiellement encore de 10 à 48 %, et plus préférentiellement encore de 10 à 36 %, et même de 10 à 25 % en poids de sucres par rapport au poids total de la composition alimentaire.

Au sens de la présente demande, le terme « sucres » au pluriel désigne les mono- et disaccharides apportés seuls ou via des ingrédients en contenant.

On peut également envisager des compositions alimentaires selon l'invention qui sont totalement dépourvues de saccharose, une saveur sucrée pouvant être apportée par du fructose et/ou des édulcorants tels que les polyols, des édulcorant intenses (par exemple l'aspartame ou l'acésulfame-K) ou leur mélanges.

Les compositions alimentaires selon l'invention peuvent en plus comprendre, entre autre, des émulsifiants, du sel, des arômes, des conservateurs, du cacao sous différentes formes (de préférence de la poudre de cacao dégraissée ou fortement dégraissée), des fruits entiers ou en morceaux, des fruits ou des légumes en purée, en morceaux ou en poudre, des coulis de fruits, des confitures, des noisettes ou d'autres fruits secs broyés, des céréales, des épices, des herbes, des fibres alimentaires solubles ou insolubles, des levures ou leurs extraits.

Les émulsifiants sont ceux habituellement utilisés dans le domaine des compositions alimentaires, notamment la lécithine, le phosphatide d'ammonium, le polyglycérol polyricinoléate (PGPR) ou les mono et diglycérides ou leurs mélanges.

Les arômes peuvent être des arômes naturels ou synthétiques. Parmi les arômes naturels on peut citer la vanille, le caramel, la cannelle et parmi les arômes synthétiques la vanilline et certains arômes imitant des fruits, tels que la fraise ou la framboise.

L'amidon natif apporte en général un certain taux de microorganismes, ce qui peut dégrader la qualité de la composition alimentaire, notamment sa stabilité. Ce risque de dégradation existe notamment faiblement chez les compositions alimentaires ayant une activité de l'eau (Aw) de 0,6 à 0,73, plus fortement pour les Aw de 0,74 à 0,82. Ce risque, bien connu de l'homme de l'art, dépend aussi du pH, de la température et de la durée de conservation. Afin d'éviter ce phénomène, on peut réfrigérer le produit et/ou, selon sa durée de vie, soit pasteuriser ou stériliser (par exemple par irradiation) l'amidon natif avant incorporation dans la composition alimentaire, soit ajouter un conservateur à la composition alimentaire. Par « conservateurs », on entend des composés inhibant ou retardant la prolifération des micro-organismes dans la composition, en particulier de levures et/ou moisissures et/ou bactéries. Les conservateurs pouvant être ajoutés aux produits de cuisson céréaliers comportant un fourrage, ledit fourrage comprenant une composition alimentaire selon l'invention sont ceux habituellement utilisés dans le domaine des compositions alimentaires et comprennent notamment l'acide sorbique et ses sels (E200 à E203), l'acide benzoïque et ses sels (E210 à E219), les sulfites et dérivés (E220 à E228), la natamycine, la nisine, le propionate de calcium et leurs mélanges.

De préférence, on utilisera un conservateur si l'Aw est supérieure à 0,72, et surtout supérieure à 0,80. Un exemple, d'un conservateur préféré est le sorbate de potassium.

Des compositions alimentaires de produit de cuisson céréalier selon l'invention particulièrement préférées sont des confitures ayant une activité de l'eau (Aw) de 0,60 à 0,75, de préférence 0,65 à 0,72. Ces confitures conviennent à une conservation d'au moins un mois à température comprise entre 15 et 25°C après ouverture. D'autres compositions alimentaires de produit de cuisson céréalier selon l'invention particulièrement préférées sont des confitures ayant une activité de l'eau (Aw) de 0,75 à 0,82, de préférence de 0,78 à 0,82. Ces confitures sont adaptées à une conservation de quelques jours à une température comprise entre 15 et 25°C et/ou à une conservation réfrigérée après ouverture. Avantageusement, les deux types de confitures ont une teneur en matières grasses de 0 à 10 %, de préférence de 0 à 5 %, et plus préférentiellement encore de 0 à 2 % et même 0 à 0,8% en poids par rapport au poids total de la confiture, comprennent au moins une poudre d'amidon non gélatinisé et ont une teneur en sucres de 10 à 72 %, de préférence de 10 à 55%, avantageusement de 12 à 42 %, et plus préférentiellement encore de 18 à 30 % en poids par rapport au poids total de la confiture. Avantageusement, la teneur en saccharose des confitures selon l'invention est de 8 à 53 %, de préférence de 12 à 42 %, et plus préférentiellement encore de 18 à 30 % en poids par rapport au poids total de la confiture.

Les confitures de produits de cuisson céréaliers selon l'invention comprennent de 4 à 40 %, de préférence de 10 à 40 %, et plus préférentiellement encore de 20 à 40 %, avantageusement 30 à 40 % en poids sec par rapport au poids de la confiture.

D'autres compositions alimentaires de produits de cuisson céréaliers selon l'invention particulièrement préférées sont des miels ou spécialités au miel ayant une activité de l'eau (Aw) de 0,50 à 0,80, de préférence de 0,55 à 0,70, et plus préférentiellement encore de 0,50 à 0,63 et même de 0,56 à 0,63, et une teneur en matières grasses de 0 à 10 %, de préférence de 0 à 5 %, et plus préférentiellement encore de 0 à 2% et même 0 à 0,5 % en poids par rapport au poids total du miel ou de la spécialité au miel, comprenant au moins une poudre d'amidon non gélatinisé natif ou surséché et ayant une teneur en sucres de 10 à 70 %, de préférence de 20 à 59 %, et plus préférentiellement encore de 35 à 55 % et même de 35 à 45% en poids par rapport au poids total du miel ou de la spécialité au miel.

Par « spécialité au miel » on comprend une composition alimentaire de produit de cuisson céréalier selon l'invention comprenant au moins 30 % en poids de miel.

De préférence les miels ou spécialités au miel selon l'invention comprennent de 10 à 40 %, de préférence de 20 à 40 %, et plus préférentiellement encore de 26 à 35 % d'amidon sec en poids par rapport au poids total de miel ou de la spécialité au miel.

L'ajout de 10 à 40 % en poids d'amidon sec par rapport au poids total du miel contenant l'amidon dans un miel liquide entraîne un changement de texture de sorte que ce miel est perçu comme un miel crémeux à semi cristallin. De plus, le goût d'un tel miel est un peu moins sucré et moins brûlant par rapport à un miel traditionnel.

La composition alimentaire de produit de cuisson céréalier selon l'invention peut être obtenue par dispersion de l'amidon dans une composition alimentaire constituée d'une phase aqueuse continue traditionnelle.

La gélatinisation de l'amidon est un phénomène bien connu de l'homme de l'art. Elle est caractérisée par un gonflement important des granules d'amidon par absorption d'eau et même leur éclatement si le chauffage est trop intense. Les conséquences immédiatement visibles sont une augmentation de viscosité et la "solubilisation" de l'amidon dans les milieux aqueux tandis que des granules non gélatinisés sont seulement dispersés en suspension. La « solubilisation » de l'amidon gélatinisé se traduit par la disparition du trouble lié à la dispersion des granules d'amidon non gélatinisés.

La gélatinisation se produit en présence d'eau au dessus d'une certaine température. C'est un phénomène rapide et franc, c'est-à-dire que la quasi totalité des granules d'un même amidon natif dans le même milieu gélifie à une température T +/- 3°C. Cette gélification est irréversible.

Mais la température de gélification d'un amidon natif est variable en fonction de la nature de l'amidon et de la composition du milieu alimentaire aqueux. Ainsi, la température de gélatinisation de l'amidon de manioc dans l'eau pure est de 70°C quelque soit par exemple la date de récolte, celle de l'amidon de pomme de terre est de 63°C, celle de l'amidon de maïs est de 76°C, celle de l'amidon de blé est de 82°C (méthode de mesure : température d'empesage d'une suspension à 8% d'amidon dans l'eau placée dans un viscoamylographe Brabender ; chauffage par double enveloppe à 1.5°C / minute). En ce qui concerne l'influence de la composition du milieu de gélatinisation, l'augmentation de la teneur en sucres ainsi que la diminution de l'eau augmentent la température de gélatinisation.

Ainsi, dans le cadre de la présente invention, la température de gélatinisation qui est à prendre en considération correspond à la température de gélatinisation de l'amidon natif utilisé dans le milieu alimentaire aqueux utilisé, et non dans l'eau pure.

Ainsi, afin de préserver l'amidon dans son état natif dans la composition alimentaire selon l'invention, il est impératif de ne pas le chauffer au dessus de sa température de gélatinisation pendant la préparation de la composition alimentaire et/ou lors de l'utilisation ultérieure. De préférence, lors de sa préparation et/ou ultérieurement, la composition alimentaire selon l'invention est chauffée au maximum à une température qui est de 7°C inférieure à la température de gélification de l'amidon mis en oeuvre. Dans le cas où on met en oeuvre un mélange de différents amidons la température de gélification la plus basse est déterminante.

Par exemple, dans le cas d'une confiture de fourrage pour produit de cuisson céréalier selon l'invention l'amidon ou le mélange d'amidon est ajouté après refroidissement de la préparation aux fruits.

Il est également possible d'effectuer le mélange juste ou peu avant la consommation de la composition alimentaire selon l'invention.

Ainsi, un autre objet de l'invention est un kit pour la préparation d'une composition alimentaire de fourrage pour produit de cuisson céréalier selon l'invention tel que décrit précédemment. Ce kit comprend un premier emballage contenant une composition alimentaire ayant une phase aqueuse continue et un second emballage contenant au moins une poudre d'amidon non gélatinisé. Avantageusement, le second emballage contient en plus un agent de masquage de goût pour masquer le goût d'amidon. De préférence, l'agent de masquage de goût est choisi dans le groupe comprenant le saccharose, le fructose, les fruits lyophilisés, le chocolat, le cacao, le caramel, les pâtes à tartiner..., et leurs mélanges. Cet agent de masquage peut se présenter sous forme de poudre ou de liquide. De préférence, l'Aw du second emballage est inférieure ou égale à 0,8, de préférence, inférieure ou égale à 0,7 et avantageusement inférieure ou égale à 0,6.

De préférence, la composition alimentaire contenue dans le premier emballage est une compote ou purée de fruits et/ou de légumes.

Le kit pour la préparation d'une composition alimentaire selon l'invention a l'avantage que l'amidon natif est ajouté juste ou peu avant la consommation du produit. De cette façon, le risque de dégradation du produit final par les microorganismes apportés par l'amidon, notamment natif, est minimisé.

Le terme « produit de cuisson céréalier » tel qu'utilisé dans la présente demande comprend les biscuits secs, les gaufrettes, les biscottes, les barres de céréales, les gâteaux moelleux et pâtisseries.

Le produit de cuisson céréalier selon l'invention peut par exemple être un biscuit sec comportant au moins une couche de fourrage comprenant la composition alimentaire selon l'invention entre deux couches de biscuit sec ou de gaufrette. La composition alimentaire de fourrage du produit de cuisson céréalier selon l'invention est de préférence une confiture.

Il peut également s'agir d'une gaufrette fourrée, dans laquelle au moins deux feuilles de gaufrette sont séparées par une couche de fourrage comprenant la composition alimentaire selon l'invention. De préférence, la gaufrette fourrée comporte 2 à 4 feuilles de gaufrettes séparées les unes des autres par une couche de fourrage comprenant la composition alimentaire selon l'invention. La composition alimentaire de fourrage du produit de cuisson céréalier selon l'invention est de préférence une confiture.

Le produit de cuisson céréalier selon l'invention peut aussi être un gâteau moelleux comportant un fourrage comprenant une composition alimentaire selon l'invention. La composition alimentaire de fourrage du produit de cuisson céréalier selon l'invention est de préférence une confiture ou une spécialité au miel. Le gâteau moelleux peut par exemple comporter un coeur de fourrage, qui peut par exemple être introduit par injection. Le gâteau moelleux peut aussi être un gâteau roulé obtenu par tartinage du fourrage sur au moins une des surfaces du gâteau moelleux et puis roulage. Le gâteau moelleux peut aussi comporter au moins une couche de fourrage selon l'invention entre au moins deux couches de gâteau moelleux. Le gâteau moelleux peut aussi comporter au moins une couche de fourrage selon l'invention entre une couche de gâteau moelleux et une coque de chocolat ou imitation de chocolat.

Enfin, le produit de cuisson céréalier selon l'invention peut également comprendre un fourrage comprenant la composition alimentaire selon l'invention déposé(e) dans un biscuit creux, par exemple une tartelette ou une barquette. La composition alimentaire de fourrage du produit de cuisson céréalier selon l'invention est de préférence une confiture.

Généralement, le produit de cuisson céréalier selon l'invention comporte de 16 % à 55 %, avantageusement de 20 % à 45 %, de préférence de 25 % à 35 %, et plus préférentiellement encore soit de 25 % à 30 % pour un avantage nutritionnel supplémentaire ou soit de 28 à 35% pour un avantage organoleptique supplémentaire, en poids de fourrage comprenant la composition alimentaire selon l'invention par rapport au poids total du produit fini.

Le produit de cuisson céréalier selon l'invention comprend avantageusement de 1,5 % à 25 % en poids de matières grasses par rapport au poids total du produit de cuisson céréalier, de préférence de 2 à 15 %, de façon encore plus préférable de 2 à 10% et même de 2 à 6 %.

Le produit de cuisson céréalier selon l'invention comprend avantageusement de 20 % à 63 % en poids de sucres par rapport au poids total du produit de cuisson céréalier, de préférence de 27 à 58 %, de façon encore plus préférable de 27 à 48 % et même de 35 à 46 %. Plus préférentiellement encore, il comprend de 18 % à 48 % en poids de sucres par rapport au poids total du produit de cuisson céréalier, de préférence de 18 à 38 %, de façon encore plus préférable de 18 à 28 % et même de 20 à 25 %.

Après emballage hermétique, les produits de cuisson céréaliers selon l'invention se conservent à une température de 15 à 25°C pendant au moins un mois, de préférence pendant au moins 6 mois, si l'Aw du fourrage est de 0,3 à 0,6. Si l'Aw est de 0,6 à 0,8, les produits de cuisson céréaliers selon l'invention se conservent, après emballage hermétique, à une température de 15 à 25°C pendant au moins une semaine, de préférence pendant au moins 1 mois. Et si l'Aw du fourrage est de 0,8 à 0,82, les produits de cuisson céréaliers selon l'invention conviennent notamment, après emballage hermétique, à un stockage à une température entre 1 et 10°C pendant au moins 1 semaine, de préférence pendant au moins 1 mois ou à un stockage congelé pendant au moins 1 mois, de préférence pendant au moins 6 mois.

Les exemples de réalisation suivants illustrent la présente invention, sans en limiter en aucune façon la portée.

### EXEMPLE 1 : Confiture aux myrtilles

### Recette 1 :

On prépare une confiture aux myrtilles selon l'invention à partir de
- 850 g d'une confiture aux myrtilles ayant la composition suivante : saccharose, 50 g de myrtilles mis en oeuvre pour 100 g de produit fini, pectine, acide citrique ; teneur totale en sucres de 60%
- 150 g d'amidon de riz natif (Remy FG de la société Remy Industries) à 13% d'eau
- 1 g de sorbate de potassium
par mélange de tous les ingrédients à 35°C dans un mélangeur planétaire Kenwood jusqu'à l'obtention d'une pâte homogène, puis dosage dans des pots de 500 g qui sont fermés hermétiquement puis refroidis immédiatement.

### Recette 2 :

On prépare une confiture aux myrtilles selon l'invention selon la recette 1 en remplaçant l'amidon de riz par 150 g d'amidon de maïs natif (Maizena) à 13% d'eau.

### Recette 3 :

On prépare une confiture aux myrtilles selon l'invention selon la recette 1 en remplaçant l'amidon de riz par 150 g d'amidon de blé natif (Meritena 200, Tate & Lyle) à 13% d'eau.

### Evaluation :

Les confitures des recettes 1, 2 et 3 ont été comparées à la confiture aux myrtilles traditionnelle qui a servi de base pour leur préparation (témoin). Le témoin a été mélangé dans les mêmes conditions que les recettes 1 à 3.

La couleur des confitures des recettes 1, 2 et 3 est légèrement éclaircie et opacifiée par rapport à celle du témoin. La confiture selon la recette 1 (amidon de riz natif) présente l'éclaircissement le plus important.

On observe également une augmentation de la viscosité des confitures selon les recettes 1, 2 et 3 par rapport au témoin. La confiture selon la recette 1 présente la viscosité la plus élevée, tandis que la confiture selon la recette 3 présente la viscosité la plus faible des trois confitures selon l'invention, tout en restant supérieure à celle du témoin.

Les confitures selon recettes 1, 2 et 3 et le témoin ont toutes une activité de l'eau (Aw) de 0.82 +/- 0.02.

Les confitures selon les recettes 1, 2 et 3 ont un très léger goût d'amidon et goût un peu moins sucré par rapport au témoin, mais elles sont toujours perçues comme des confitures traditionnelles, tout comme le témoin.

Les confitures selon les recettes 1, 2 et 3 et le témoin ont les caractéristiques nutritionnelles suivantes:

**Tableau 1**

| | % en sucres* | % amidon sec* | (kcal totales)/100g | (kcal glucides complexes)/(kcal totales) |
|---|---|---|---|---|
| Recettes 1 à 3 | 51 | 13 | 257 | 20.3 |
| Témoin | 60 | 0 | 241 | 0 |

| | | | | |
|---|---|---|---|---|
| * Les pourcentages sont exprimés en poids sur poids total de la confiture | | | | |

Le tableau 1 montre pour les recettes 1 à 3 une augmentation de la teneur totale en calories de 6.6 % pour 100 g de confiture, mais la distribution des calories est beaucoup plus équilibrée, car 20.3 % des calories proviennent de l'amidon, c'est-à-dire de glucides complexes lentement digestibles, contre 0 pour le témoin. Enfin, la teneur en sucres a été réduite de 15%.

### EXEMPLE 2 : Gâteau moelleux fourré à la confiture

Des gâteaux moelleux de 21 g sont cuits selon un procédé standard. Ces gâteaux moelleux connus de l'homme de l'art comprennent 13 % en poids de matières grasses, 61.8% en poids de glucides, dont 22,4% en poids de sucres (mono- et disaccharides, dont 17% de saccharose), 6.3% de protéines et 16.5 % d'eau.

Avec ces gâteaux moelleux, on prépare 2 lots de gâteaux moelleux fourrés, qui correspondent à des gâteaux moelleux fourrés à la confiture classiques, dont un lot de gâteaux moelleux témoins comprenant la confiture témoin de l'exemple 1, et un lot de gâteaux moelleux selon l'invention comprenant la confiture selon la recette 3 de l'exemple 1.

Juste après leur cuisson, les gâteaux moelleux sont fourrés avec 9 g des confitures respectives (soit 30% de fourrage et 70% de gâteux moelleux) à l'aide d'un système d'injection à deux aiguilles. La confiture est injectée à une température de 28 à 35°C. Les gâteaux ainsi fourrés sont refroidis à 20°C.

Les gâteaux moelleux fourrés selon l'invention ont un aspect strictement identique au témoin, le goût de gâteau et sa texture moelleuse étant inchangés. Les gâteaux selon l'invention sont perçus comme très proches du témoin en termes d'odeur, de sucré, de texture du fourrage (confiture). Le fondant, la granulométrie et le pâteux sont très proches et n'ont pas été perçus comme significativement différents par un panel de consommateurs.

Après emballage hermétique, les gâteaux moelleux fourrés selon l'invention se conservent pendant au moins 1 mois à 6°C.

### EXEMPLE 3 : Miel

### Recette 1 :

On prépare un miel selon l'invention à partir de
- 700 g de miel liquide (Miel des Pyrénées), et
- 300 g d'amidon de blé natif (Meritena 200, Tate & Lyle) à 13% d'eau
par mélange de tous les ingrédients à 35°C dans un mélangeur planétaire Kenwood jusqu'à l'obtention d'une pâte homogène, puis dosage dans des pots de 500 g qui sont fermés hermétiquement puis refroidis immédiatement

### Recette 2 :

On prépare un miel selon l'invention selon la recette 1 en utilisant 600g de miel liquide (miel des Pyrénées) et 400 g d'amidon de blé (Meritena 200, Tate & Lyle) à 13% d'eau.

### Evaluation :

Les miels des recettes 1 et 2 ont été comparés au miel traditionnel qui a servi de base pour leur préparation (témoin).

La couleur des miels des recettes 1 et 2 est éclaircie et opacifiée par rapport à celle du témoin. Le miel selon la recette 2 présente l'éclaircissement et l'opacification les plus importants.

On observe également une augmentation forte de la viscosité des miels selon les recettes 1 et 2 par rapport au témoin. Le miel selon la recette 2 présente la viscosité la plus élevée.

Les miels selon les recettes 1 et 2 et le témoin ont tous ont une activité de l'eau (Aw) de 0,59 +/- 0.02.

Les miels selon les recettes 1 et 2 ont un goût nettement moins sucré que le témoin, mais ils sont toujours identifiés comme des miels normaux par dix des dix consommateurs qui ont testé les miels selon les recettes 1 et 2 et le témoin. Huit de ces dix consommateurs ont préférée le miel selon la recette 2 au témoin en dégustation seule et sur tartine de baguette blanche.

Les miels selon les recettes 1 et 2 sont perçus par le consommateur comme des miels semi-cristallisés traditionnels, tandis que le témoin est perçu comme un miel liquide traditionnel.

Les miels selon les recettes 1 et 2 et le témoin ont les caractéristiques nutritionnelles suivantes :

**Tableau 2**

| | % en sucres* | % amidon sec* | (kcal totales)/100g | (kcal glucides complexes)/(kcal totales) |
|---|---|---|---|---|
| Recette 1 | 54.2 | 26.1 | 323 | 32.3 |
| Recette 2 | 46.5 | 34.8 | 326 | 42.7 |
| Témoin | 77.5 | 0 | 312 | 0 |

| | | | | |
|---|---|---|---|---|
| * Les pourcentages sont exprimés en poids sur poids total de miel | | | | |

Le tableau 2 montre pour les recettes 1 et 2 une augmentation de la teneur totale en calories de 3.5 et 4.5 % respectivement pour 100 g de miel, mais la distribution des calories est beaucoup plus équilibrée, car 32.3 et 42,7 % respectivement des calories proviennent de l'amidon, c'est-à-dire de glucides complexes lentement digestibles contre 0 pour le témoin.

Enfin, la teneur en sucres est abaissée de 30% pour la recette 1 et de 40% pour la recette 2 par rapport au témoin.

## Revendications

1. Produit de cuisson céréalier comportant un fourrage, ledit fourrage comprenant une composition alimentaire constituée d'une phase aqueuse continue, ladite composition alimentaire ayant une activité de l'eau (Aw) de 0,3 à 0,82 et comprenant
une teneur en matières grasses de moins de 15 % en poids par rapport au poids total de la composition alimentaire,
une teneur en sucres de 10 à 84% en poids par rapport au poids total de la composition alimentaire,
de 4 à 40 % en poids sec par rapport au poids total de la composition alimentaire d'une poudre d'amidon non gélatinisé natif ou surséché,
ladite composition alimentaire étant **caractérisée en ce que**
l'amidon non gélatinisé a, pour au moins 90 % des particules, une granulométrie comprise entre 2 µm et 100 µm, et
ledit amidon n'est pas chauffé au dessus de sa température de gélatinisation lors de l'utilisation ultérieure de la composition alimentaire.

2. Produit de cuisson céréalier selon la revendication 1, **caractérisé en ce que** la composition alimentaire est choisie dans le groupe constitué des confitures, des miels, des compotes, des purées de fruits et/ou de légumes avec ou sans morceaux, des desserts fruitiers, des gelées, des produits à tartiner à phase aqueuse continue, ou des pâtes de fruits.

3. Produit de cuisson céréalier selon l'une quelconque des revendications précédentes, **caractérisé en ce que** la composition alimentaire a une Aw de 0,4 à 0,82, plus préférentiellement encore de 0,50 à 0,82, de préférence 0,58 à 0,82 et plus préférentiellement encore de 0,58 à 0,73.

4. Produit de cuisson céréalier selon l'une quelconque des revendications précédentes, **caractérisé en ce que** la teneur en matière sèche dans la composition alimentaire est inférieure à 80 % en poids.

5. Produit de cuisson céréalier selon l'une quelconque des revendications précédentes, **caractérisé en ce que** la teneur en amidon non gélatinisé dans la composition alimentaire est de 10 à 40 %, avantageusement de 20 à 40 % et même de 30 à 40% en poids sec par rapport au poids total de la composition alimentaire.

6. Produit de cuisson céréalier selon l'une quelconque des revendications précédentes, **caractérisé en ce que** l'amidon non gélatinisé dans la composition alimentaire a pour au moins 90 % des particules une granulométrie comprise entre 5 µm et 45 µm.

7. Produit de cuisson céréalier selon l'une quelconque des revendications précédentes, **caractérisé en ce qu'**au moins 5%, de préférence au moins 10 %, et plus préférentiellement encore au moins 15 % des particules de l'amidon non gélatinisé dans la composition alimentaire ont une taille supérieure ou égale à 10 µm.

8. Produit de cuisson céréalier selon l'une quelconque des revendications précédentes, **caractérisé en ce que** l'amidon est choisi dans le groupe constitué par l'amidon de blé, l'amidon de riz, l'amidon de maïs, l'amidon de maïs waxy, l'amidon de sorgho, l'amidon de tapioca, l'amidon de pomme de terre, l'amidon de manioc et leurs mélanges.

9. Produit de cuisson céréalier selon l'une quelconque des revendications précédentes, **caractérisé en ce que** la teneur en matières grasses dans la composition alimentaire est de 0 à 10 %, de préférence de 0 à 5 %, plus préférentiellement encore de 0 à 3 %, et même de 0 à 1 % en poids par rapport au poids total de la composition alimentaire.

10. Produit de cuisson céréalier selon l'une quelconque des revendications précédentes, **caractérisé en ce que** la teneur en sucres dans la composition alimentaire est de 10 à 56 %, de préférence de 10 à 48, plus préférentiellement de 10 à 36 % en poids par rapport au poids total de la composition alimentaire.

11. Produit de cuisson céréalier selon l'une quelconque des revendications précédentes, **caractérisé en ce qu'**il s'agit d'un biscuit sec comportant au moins une couche du fourrage entre deux couches de biscuit sec ou de gaufrette.

12. Produit de cuisson céréalier selon l'une quelconque des revendications précédentes, **caractérisé en ce que** le fourrage est déposé dans un biscuit creux ou une coque de chocolat.

13. Produit de cuisson céréalier selon l'une quelconque des revendications précédentes, **caractérisé en ce que** le produit de cuisson céréalier est un gâteau moelleux.

14. Produit de cuisson céréalier selon la revendication 13, **caractérisé en ce qu'**il s'agit d'un gâteau moelleux comportant un coeur de fourrage.

15. Produit de cuisson céréalier selon la revendication 13, **caractérisé en ce qu'**il s'agit d'un gâteau moelleux roulé obtenu par tartinage du fourrage sur au moins une des surface du gâteau moelleux et puis roulage.

16. Produit de cuisson céréalier selon la revendication 13, **caractérisé en ce qu'**il s'agit d'un gâteau moelleux comportant au moins une couche de fourrage entre au moins deux couches de gâteau moelleux.

17. Produit de cuisson céréalier selon la revendication 13, **caractérisé en ce qu'**il s'agit d'un gâteau moelleux comportant au moins une couche de fourrage entre une couche de gâteau moelleux et une coque de chocolat ou imitation de chocolat.

18. Produit de cuisson céréalier selon l'une quelconque des revendications précédentes, **caractérisé en ce qu'**il comporte de 16 % à 55 %, avantageusement de 20 % à 45 %, de préférence de 25 % à 35 %, et plus préférentiellement encore soit de 25 % à 30 % pour un avantage nutritionnel supplémentaire ou soit de 28 à 35% pour un avantage organoleptique supplémentaire, en poids de fourrage comprenant la composition alimentaire selon l'invention par rapport au poids total du produit fini.

19. Produit de cuisson céréalier selon l'une quelconque des revendications précédentes, **caractérisé en ce qu'**il comprend de 1.5 % à 25 % en poids de matières grasses par rapport au poids total du produit fini de cuisson céréalier, de préférence de 2 à 15 %, de façon encore plus préférable de 2 à 10 et même 2 à 6 %.

20. Produit de cuisson céréalier selon l'une quelconque des revendications précédentes, **caractérisé en ce qu'**il comprend de 20 % à 63 % en poids de sucres par rapport au poids total du produit de cuisson céréalier, de préférence de 27 à 58 %, de façon encore plus préférable de 27 à 48 % et même de 35 à 46 %.

## Patentansprüche

1. Gekochtes Getreideprodukt, umfassend eine Füllung, wobei die Füllung eine Lebensmittelzusammensetzung umfasst, bestehend aus einer kontinuierlichen wässrigen Phase, wobei die Lebensmittelzusammensetzung eine Aktivität des Wassers (Aw) von 0,3 bis 0,82 aufweist und Folgendes umfasst
einen Fettgehalt von weniger als 15 Gew.-%, bezogen auf das Gesamtgewicht der Lebensmittelzusammensetzung,
einen Zuckergehalt von 10 bis 84 Gew.-%, bezogen auf das Gesamtgewicht der Lebensmittelzusammensetzung,
4 bis 40 Gew.-% bezüglich des Trockengewichtes, bezogen auf das Gesamtgewicht der Lebensmittelzusammensetzung eines nativen oder übertrockneten, nicht gelatinisierten Stärkepulvers,
wobei die Lebensmittelzusammensetzung **dadurch gekennzeichnet ist, dass**
die nicht gelatinisierte Stärke, für mindestens 90 % der Partikel, eine Granulometrie im Bereich zwischen 2 µm und 100 µm aufweist, und
die Stärke während der anschließenden Verwendung der Lebensmittelzusammensetzung nicht über ihre Gelatinisierungstemperatur erhitzt wird.

2. Gekochtes Getreideprodukt nach Anspruch 1, **dadurch gekennzeichnet, dass** die Lebensmittelzusammensetzung ausgewählt ist aus der Gruppe, bestehend aus Konfitüren, Honigen, Kompotten, Frucht- und/oder Gemüsemusen mit oder ohne Stücken, Fruchtdesserts, Gelees, streichfähigen Produkten mit kontinuierlicher wässriger Phase, oder Fruchtpasten.

3. Gekochtes Getreideprodukt nach einem der vorhergehenden Ansprüche, **dadurch gekennzeichnet, dass** die Lebensmittelzusammensetzung eine Aw von 0,4 bis 0,82, noch stärker bevorzugt von 0,50 bis 0,82, bevorzugt von 0,58 bis 0,82 und noch stärker bevorzugt von 0,58 bis 0,73 aufweist.

4. Gekochtes Getreideprodukt nach einem der vorhergehenden Ansprüche, **dadurch gekennzeichnet, dass** der Trockenmassegehalt in der Lebensmittelzusammensetzung weniger als 80 Gew.-% beträgt.

5. Gekochtes Getreideprodukt nach einem der vorhergehenden Ansprüche, **dadurch gekennzeichnet, dass** der Gehalt an nicht gelatinisierter Stärke in der Lebensmittelzusammensetzung 10 bis 40 Gew.-%, vorteilhafterweise 20 bis 40 Gew.-% und sogar 30 bis 40 Gew.-% (Trockenmasse), bezogen auf das Gesamtgewicht der Lebensmittelzusammensetzung, beträgt.

6. Gekochtes Getreideprodukt nach einem der vorhergehenden Ansprüche, **dadurch gekennzeichnet, dass** die nicht gelatinisierte Stärke in der Lebensmittelzusammensetzung für mindestens 90 % der Partikel eine Granulometrie im Bereich zwischen 5 µm und 45 µm aufweist.

7. Gekochtes Getreideprodukt nach einem der vorhergehenden Ansprüche, **dadurch gekennzeichnet, dass** mindestens 5 %, bevorzugt mindestens 10 % und noch stärker bevorzugt mindestens 15 % der Partikel der nicht gelatinisierten Stärke in der Lebensmittelzusammensetzung eine Größe von größer oder gleich 10 µm aufweisen.

8. Gekochtes Getreideprodukt nach einem der vorhergehenden Ansprüche, **dadurch gekennzeichnet, dass** die Stärke ausgewählt ist aus der Gruppe, bestehend aus Weizenstärke, Reisstärke, Maisstärke, Waxymaisstärke, Sorghumstärke, Tapiokastärke, Kartoffelstärke, Maniokstärke und deren Gemischen.

9. Gekochtes Getreideprodukt nach einem der vorhergehenden Ansprüche, **dadurch gekennzeichnet, dass** der Fettgehalt in der Lebensmittelzusammensetzung 0 bis 10 Gew.-%, bevorzugt 0 bis 5 Gew.-%, noch stärker bevorzugt 0 bis 3 Gew.-% und sogar 0 bis 1 Gew.-%, bezogen auf das Gesamtgewicht der Lebensmittelzusammensetzung, beträgt.

10. Gekochtes Getreideprodukt nach einem der vorhergehenden Ansprüche, **dadurch gekennzeichnet, dass** der Zuckergehalt in der Lebensmittelzusammensetzung 10 bis 56 Gew.-%, bevorzugt 10 bis 48 Gew.-%, stärker bevorzugt 10 bis 36 Gew.-%, bezogen auf das Gesamtgewicht der Lebensmittelzusammensetzung, beträgt.

11. Gekochtes Getreideprodukt nach einem der vorhergehenden Ansprüche, **dadurch gekennzeichnet, dass** es sich um ein Trockengebäck handelt, das mindestens eine Schicht der Füllung zwischen zwei Schichten aus Trockengebäck oder Waffeln umfasst.

12. Gekochtes Getreideprodukt nach einem der vorhergehenden Ansprüche, **dadurch gekennzeichnet, dass** die Füllung in ein hohles Gebäck oder eine Schokoladenhülle eingebracht wird.

13. Gekochtes Getreideprodukt nach einem der vorhergehenden Ansprüche, **dadurch gekennzeichnet, dass** das gekochte Getreideprodukt ein weicher Kuchen ist.

14. Gekochtes Getreideprodukt nach Anspruch 13, **dadurch gekennzeichnet, dass** es sich um einen weichen Kuchen handelt, der einen Kern aus Füllung umfasst.

15. Gekochtes Getreideprodukt nach Anspruch 13, **dadurch gekennzeichnet, dass** es sich um einen gerollten, weichen Kuchen handelt, der erhalten wird, indem die Füllung auf mindestens eine der Oberflächen des weichen Kuchens gestrichen und dieser anschließend aufgerollt wird.

16. Gekochtes Getreideprodukt nach Anspruch 13, **dadurch gekennzeichnet, dass** es sich um einen weichen Kuchen handelt, der mindestens eine Schicht aus Füllung zwischen mindestens zwei Schichten aus weichem Kuchen umfasst.

17. Gekochtes Getreideprodukt nach Anspruch 13, **dadurch gekennzeichnet, dass** es sich um einen weichen Kuchen handelt, der mindestens eine Schicht aus Füllung zwischen einer Schicht aus weichem Kuchen und eine Hülle aus Schokolade oder einer künstlichen Schokolade umfasst.

18. Gekochtes Getreideprodukt nach einem der vorhergehenden Ansprüche, **dadurch gekennzeichnet, dass** es 16 Gew.-% bis 55 Gew.-%, vorteilhafterweise 20 Gew.-% bis 45 Gew.-%, bevorzugt 25 Gew.-% bis 35 Gew.-% und noch stärker bevorzugt entweder 25 Gew.-% bis 30 Gew.-%, für einen zusätzlichen Ernährungswert oder 28 Gew.-% bis 35 Gew.-% für einen zusätzlichen organoleptischen Wert, Füllung, umfassend die Lebensmittelzusammensetzung gemäß der Erfindung, bezogen auf das Gesamtgewicht des Endprodukts, umfasst.

19. Gekochtes Getreideprodukt nach einem der vorhergehenden Ansprüche, **dadurch gekennzeichnet, dass** es 1,5 Gew.-% bis 25 Gew.-% Fette, bezogen auf das Gesamtgewicht des gekochten Getreideendprodukts, bevorzugt 2 bis 15 Gew.-%, noch stärker bevorzugt 2 bis 10 Gew.-% und sogar 2 bis 6 Gew.-%, umfasst.

20. Gekochtes Getreideprodukt nach einem der vorhergehenden Ansprüche, **dadurch gekennzeichnet, dass** es 20 Gew.-% bis 63 Gew.-% Zucker, bezogen auf das Gesamtgewicht des gekochten Getreideprodukts, bevorzugt 27 bis 58 Gew.-%, noch stärker bevorzugt 27 bis 48 Gew.-% und sogar 35 bis 46 Gew.-%, umfasst.

## Claims

1. Cereal baking product comprising a filling, said filling comprising a food composition consisting of a continuous aqueous phase, said food composition having a water activity (Aw) of 0.3 to 0.82 and comprising
a fat content of less than 15% by weight in relation to the total weight of the food composition,
a sugar content of 10 to 84% by weight in relation to the total weight of the food composition,
4 to 40% dry weight in relation to the total weight of the food composition of a native or overdried non-gelatinised starch powder,
said food composition being **characterised in that**
the non-gelatinised starch has, for at least 90% of the particles, a grain size between 2 µm and 100 µm, and
said starch is not heated above the gelatinisation temperature thereof during the subsequent use of the food composition.

2. Cereal baking product according to claim 1, **characterised in that** the food composition is chosen from the group consisting of jams, honeys, compotes, fruit and/or vegetable purées with or without pieces, fruit desserts, jellies, spreads with a continuous aqueous phase, or fruit jellies.

3. Cereal baking product according to any of the above claims, **characterised in that** the food composition has an Aw of 0.4 to 0.82, more preferentially of 0.50 to 0.82, preferably 0.58 to 0.82 and more preferentially of 0.58 to 0.73.

4. Cereal baking product according to any of the above claims, **characterised in that** dry matter content in the food composition is less than 80% by weight.

5. Cereal baking product according to any of the above claims, **characterised in that** the non-gelatinised starch content in the food composition is from 10 to 40%, advantageously from 20 to 40% and even from 30 to 40% dry weight in relation to the total weight of the food composition.

6. Cereal baking product according to any of the above claims, **characterised in that** the non-gelatinised starch in the food composition has, for at least 90% of the particles, a grain size between 5 µm and 45 µm.

7. Cereal baking product according to any of the above claims, **characterised in that** at least 5%, preferably at least 10%, and more preferentially at least 15% of the non-gelatinised starch particles in the food composition have a size greater than or equal to 10 µm.

8. Cereal baking product according to any of the above claims, **characterised in that** the starch is chosen in the group consisting of wheat starch, rice starch, corn starch, waxy corn starch, sorghum starch, tapioca starch, potato starch, cassava starch and mixtures thereof.

9. Cereal baking product according to any of the above claims, **characterised in that** the fat content in the food composition is from 0 to 10%, preferably from 0 to 5%, more preferentially from 0 to 3%, and even from 0 to 1% by weight in relation to the total weight of the food composition.

10. Cereal baking product according to any of the above claims, **characterised in that** the sugar content in the food composition is from 10 to 56%, preferably from 10 to 48%, more preferentially from 10 to 36% by weight in relation to the total weight of the food composition.

11. Cereal baking product according to any of the above claims, **characterised in that** it consists of a biscuit comprising at least one layer of filling between two layers of biscuit or wafer.

12. Cereal baking product according to any of the above claims, **characterised in that** the filling is deposited in a hollow biscuit or a chocolate shell.

13. Cereal baking product according to any of the above claims, **characterised in that** the cereal baking product is a cake.

14. Cereal baking product according to claim 13, **characterised in that** it consists of a cake comprising a core filling.

15. Cereal baking product according to claim 13, **characterised in that** it consists of a cake roll obtained by spreading the filling on at least one of the surfaces of the cake and rolling.

16. Cereal cooking product according to claim 13, **characterised in that** it consists of a cake comprising at least one layer of filling between at least two layers of cake.

17. Cereal baking product according to claim 13, **characterised in that** it consists of a cake comprising at least one layer of filling between a layer of cake and a chocolate or imitation chocolate shell.

18. Cereal baking product according to any of the above claims, **characterised in that** it comprises from 16% to 55%, advantageously from 20% to 45%, preferably from 25% to 35%, and more preferentially either from 25% to 30% for an additional nutritional benefit or from 28 to 35% for an additional olfactory benefit, by weight of filling comprising the food composition according to the invention in relation to the total weight of the finished product.

19. Cereal baking product according to any of the above claims, **characterised in that** it comprises from 1.5% to 25% by weight of fat in relation to the total weight of the finished cereal baking product, preferably from 2 to 15%, more preferably from 2 to 10% and even 2 to 6%.

20. Cereal baking product according to any of the above claims, **characterised in that** it comprises from 20% to 63% by weight of sugar in relation to the total weight of the cereal baking product, preferably from 27 to 58%, more preferably from 27 to 48% and even from 35 to 46%.
